# FASCICULE DE BREVET EUROPEEN

(11) **EP 2 931 510 B1**
(45) Date de publication et mention de la délivrance du brevet: **14.08.2019**
(21) Numéro de dépôt: 13818290.2
(22) Date de dépôt: 11.12.2013
(51) Int. Cl.: B29D 30/54

(54) **PROCÉDÉ DE RECHAPAGE D'UNE ENVELOPPE DE PNEUMATIQUE DE VÉHICULE**
VERFAHREN ZUR RUNDERNEUERUNG EINES FAHRZEUGREIFENGEHÄUSES
METHOD FOR RETREADING A VEHICLE TYRE CASING

(30) Priorité: 13.12.2012 FR 1262021
(43) Date de publication de la demande: 21.10.2015
(73) Titulaire: Compagnie Générale des Etablissements Michelin, 63000 Clermont-Ferrand (FR)
(72) Inventeur: ASTIER, Cédric, F-63040 Clermont-Ferrand Cedex 9 (FR)
(74) Mandataire: Redouté, Gilles Pierre
(86) Numéro de dépôt international: PCT/FR2013/053024
(87) Numéro de publication internationale: WO 2014/091149

(56) Documents cités:
- JP-A- 2003 237 310
- US-A- 1 869 680
- US-A- 2 609 026
- US-A- 3 002 549
- US-A- 4 733 705
- US-A- 4 857 122

## Description

L'invention concerne le rechapage des pneumatiques de véhicule.

L'opération de rechapage consiste classiquement à éliminer la bande de roulement usée d'une enveloppe de pneumatique pour la remplacer par une bande de roulement neuve.

Ainsi, pour les pneumatiques de poids-lourds, on élimine la bande de roulement usagée en l'usinant jusqu'à obtenir sur la carcasse de l'enveloppe un état de surface propice à la dépose d'une couche de gomme de liaison puis d'une nouvelle bande de roulement.

Il est également connu de doter le pneumatique d'une couche thermofusible reliant la bande de roulement à la carcasse. En vue du rechapage, on chauffe cette couche pour la ramollir, ce qui permet d'ôter la bande de roulement. Le brevet US 4,733,705 décrit un procédé de rechapage d'une enveloppe de pneumatique de véhicule, selon lequel l'on injecte un fluide dans une enveloppe entre une bande de roulement et un support de cette bande de roulement pour fixer cette bande de roulement sur ce support. D'autres procédés de rechapage d'une enveloppe de pneumatique sont décrits dans les brevets US 1,869,680 et US 2,609,026.

Un but de l'invention est de faciliter l'élimination de la bande de roulement sans abîmer le reste du pneumatique.

À cet effet, on prévoit selon l'invention un procédé de rechapage d'une enveloppe de pneumatique de véhicule selon la revendication 1, dans lequel on injecte un fluide dans une enveloppe entre une bande de roulement et un support de la bande de roulement pour les éloigner l'un de l'autre.

Ainsi cette injection permet de créer une amorce de séparation entre la bande de roulement et la carcasse sans risquer d'abîmer cette dernière ni même la bande de roulement. On peut ensuite facilement les séparer en tirant sur la bande. Pour cela, on peut effectuer une incision entre la bande de roulement et la carcasse jusqu'à l'enceinte de fluide ou encore appliquer une pression de fluide suffisant à provoquer une rupture d'étanchéité à la jonction entre la bande de roulement et la carcasse. L'intégrité de la carcasse est donc préservée afin qu'elle puisse recevoir dans de bonnes conditions une nouvelle bande de roulement. En outre, puisque la bande de roulement elle-même ne pas altérée, si son usure est nulle ou modérée, elle peut être réutilisée par exemple sur une autre carcasse.

Dans un mode de réalisation, préalablement à l'injection, on ramollit une couche de l'enveloppe.

A l'issue de ce ramollissement, qui peut avoir lieu par chauffage par induction, on injecte le fluide dans la couche ramollie.

Dans un autre mode de réalisation, le procédé est appliqué à une enveloppe comprenant une couche située entre la bande de roulement et le support et apte à se gonfler pour former une enceinte dans une paroi de l'enveloppe.

Avantageusement, le fluide est un gaz, notamment de l'air.

On peut néanmoins prévoir que le fluide est un liquide.

De préférence, on effectue l'injection à travers la bande de roulement.

Avantageusement, on fait progresser une aiguille d'injection dans l'épaisseur d'une paroi de l'enveloppe, l'aiguille présentant du fluide sous pression à son orifice d'extrémité libre durant la progression.

Ainsi, en appliquant la pression de fluide dès que l'aiguille commence à pénétrer dans la paroi, on fait en sorte que l'injection de fluide commence lorsque la pointe de l'aiguille atteint une couche apte à recevoir ce fluide. Il n'est donc pas nécessaire de calculer exactement à quelle profondeur faire pénétrer l'aiguille et de débuter l'injection lorsque cette profondeur est atteinte. On facilite ainsi la mise en oeuvre du procédé.

Avantageusement, on effectue l'injection de façon à former une enceinte de fluide présentant une largeur supérieure à la moitié de la largeur de la bande de roulement mesurée suivant la direction d'un axe principal de l'enveloppe.

De préférence, on effectue l'injection de façon à former une enceinte de fluide s'étendant jusqu'à des bords latéraux de la bande de roulement.

De préférence, on effectue l'injection de façon à former une enceinte de fluide s'étendant sur un tour complet autour d'un axe principal de l'enveloppe.

Avec ces différentes caractéristiques, on utilise le fluide non seulement pour créer une amorce de séparation mais pour éloigner autant que possible la bande de roulement et la carcasse, en vue de faciliter leur séparation complète.

Avantageusement, le procédé est appliqué à une enveloppe comprenant une gomme de bordure présentant une zone d'épaisseur amincie par rapport au reste de la gomme de bordure, cette zone étant située au droit d'une couche située entre la bande de roulement et le support et apte à se gonfler pour former une enceinte dans une paroi de l'enveloppe.

Cette amorce facilite l'insertion d'un outil pour séparer la bande de roulement et la carcasse. Elle peut aussi favoriser leur séparation par rupture de la gomme sous l'effet de la pression du fluide.

De préférence, préalablement à l'injection, on recouvre d'une couche étanche au fluide une jonction de la bande de roulement avec au moins un flanc de l'enveloppe.

Ainsi, on évite la rupture de la gomme au niveau de cette jonction en vue de favoriser la création d'une enceinte étendue qui facilite encore la séparation de la bande et de la carcasse.

Dans un mode de mise en oeuvre, la bande de roulement présente un niveau d'usure incompatible avec une nouvelle utilisation de cette bande de roulement en tant que telle pour le roulage dans des conditions prédéterminées.

Il s'agit de la situation dans laquelle on souhaite remplacer une bande de roulement usagée par une bande neuve.

On peut prévoir de détruire la bande de roulement.

Dans un autre mode de mise en oeuvre, la bande de roulement présente un niveau d'usure compatible avec une nouvelle utilisation de cette bande de roulement en tant que telle pour le roulage dans des conditions prédéterminées.

Dans cette situation, la bande de roulement qui est séparée de la carcasse peut être réutilisée par exemple sur une autre carcasse ou plus tard sur la même carcasse. La première carcasse peut recevoir une bande de roulement d'un autre type. On peut ainsi remplacer une bande de roulement prévue pour l'hiver avec une bande de roulement prévue pour l'été et inversement.

Avantageusement, on monte la bande de roulement sur une carcasse d'une autre enveloppe de pneumatique.

On prévoit également un enveloppe de pneumatique de véhicule qui a fait l'objet d'un rechapage avec un procédé selon l'invention.

On prévoit enfin une enveloppe de pneumatique de véhicule qui comporte une bande de roulement résultant de la mise en oeuvre d'un procédé selon l'invention sur une autre enveloppe de pneumatique.

Nous allons maintenant présenter un mode de mise en oeuvre de l'invention et des variantes à l'appui des dessins annexés sur lesquels :
- les figures 1 à 4 illustrent sur des vues en section d'une partie d'une enveloppe de pneumatique quatre étapes successives de mise en oeuvre du procédé de l'invention ;
- les figures 5 à 6 sont des vues analogues aux figures 1 à 4 illustrant une variante de mise en oeuvre du procédé ; et
- les figures 7 et 8 sont des vues analogues aux figures 5 et 6 illustrant une autre variante de mise en oeuvre du procédé.

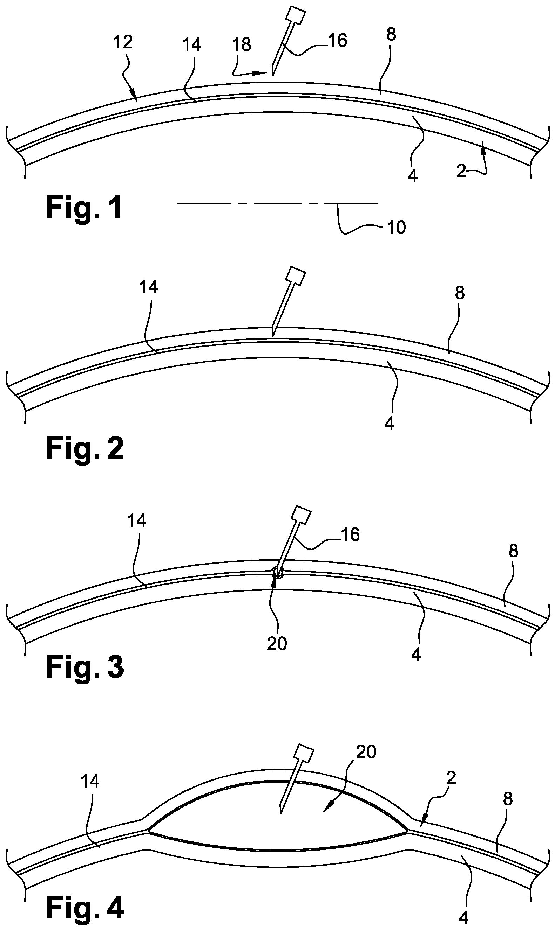

Nous allons décrire en référence aux figures 1 à 4 un mode de mise en oeuvre du procédé de l'invention. Ce procédé est appliqué à une enveloppe d'un pneumatique de roue. Il peut s'agir d'une roue d'un véhicule de type léger, d'un véhicule utilitaire, d'un véhicule de type poids-lourd ou encore d'un engin de génie civil.

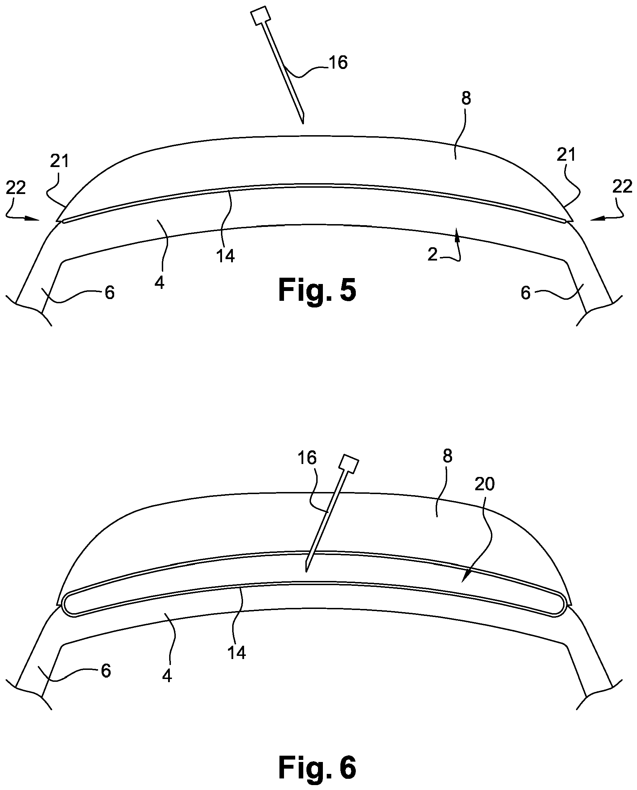

L'enveloppe 2 comprend une carcasse 4 comportant une partie principale dont la forme est voisine de celle d'un cylindre et deux flancs latéraux 6 visibles notamment à la figure 5. L'enveloppe comprend également une bande de roulement 8 portée par la carcasse du côté de celle-ci le plus éloigné de l'axe principal 10 de l'enveloppe. La bande de roulement présente à l'origine des sculptures sur sa face externe 12 mais celles-ci peuvent avoir disparu en partie ou en totalité en fonction du niveau d'usure de la bande.

L'enveloppe comprend une couche d'interface 14 interposée suivant la direction radiale à l'axe 10 entre la carcasse 4 et la bande de roulement 8. En l'espèce, il s'agit d'une couche réalisée dans un matériau thermoplastique apte à se ramollir lorsqu'il est soumis à un chauffage. De plus, cette couche peut être gonflée par injection de fluide comme on va le voir. Dans le présent exemple, la couche 14 s'étend sur toute la largeur de la bande de roulement et sur toute la circonférence de l'enveloppe.

On dispose de moyens d'injection d'un fluide sous pression formé en l'espèce par de l'air. Ces moyens comprennent notamment une aiguille 16 reliée d'une façon adaptée et qui n'a pas été illustrée en détail à une source d'air et à des moyens de pompage pour mettre l'air en pression dans l'aiguille. L'aiguille 16 présente à son extrémité libre un orifice 18 par lequel peut s'échapper l'air sous pression. Il s'agit par exemple d'une aiguille hypodermique dont l'extrémité libre est biseautée.

Dans une première étape du procédé, on ramollit la couche 14, par exemple en la chauffant. À cette fin, on peut utiliser notamment des moyens de chauffage par induction qui coopèrent avec des éléments métalliques de l'enveloppe pour y produire de la chaleur.

Ensuite, en référence à la figure 1, on injecte l'air comprimé dans l'aiguille alors que celle-ci n'est pas encore en contact avec l'enveloppe, l'air s'échappant alors par l'extrémité libre de l'aiguille.

En référence à la figure 2, on fait pénétrer l'aiguille dans l'enveloppe à partir de la face externe 12 de la bande de roulement et on la fait progresser dans l'épaisseur de la bande de roulement en direction de l'axe 10 et de la carcasse 4. Tant que l'orifice 18 n'a pas atteint la couche 14, la gomme de la bande de roulement obture cet orifice et empêche la sortie de l'air comprimé.

En référence à la figure 3, c'est seulement lorsque la pointe de l'aiguille atteint la couche 14 que l'air peut s'échapper dans cette couche et y être injecté. Le gonflement de la couche 14 crée une bulle puis une enceinte ou poche qui empêche la pointe de l'aiguille 16 de venir en contact avec la carcasse 4, ce qui garantit que cette dernière n'est pas endommagée. On stoppe à ce stade la progression de l'aiguille en direction radiale. L'enceinte 20 est formée tout entière au sein de la couche 14. La bande de roulement s'étend au-dessus de l'enceinte et la carcasse au-dessous. Ainsi, on injecte de l'air comprimé à travers la bande de roulement entre la bande de roulement et la carcasse pour les éloigner l'une de l'autre.

En référence à la figure 4, on poursuit l'injection jusqu'à donner à l'enceinte 20 une taille substantielle, par exemple, une largeur supérieure à la moitié de la largeur de la bande de roulement mesurée suivant la direction de l'axe 10.

Dans une étape ultérieure non-illustrée, on sépare la bande de roulement et la carcasse en saisissant la bande par sa partie contiguë à l'enceinte 20. À cette fin, on peut cisailler la bande de roulement au moyen d'un outil pour l'agripper. On peut aussi l'agripper sans la cisailler préalablement. On sépare alors intégralement la bande de roulement et le reste de l'enveloppe par pelage.

Ensuite, on installe sur la carcasse à l'endroit laissé libre par l'ancienne bande de roulement 8 une couche de liaison, puis une nouvelle bande de roulement par-dessus cette dernière.

Pour faciliter la séparation de la bande de roulement et de la carcasse, il peut être avantageux d'augmenter encore le volume de l'enceinte 20. C'est le cas dans la variante du procédé illustrée aux figures 5 et 6. Dans cette variante, comme illustré à la figure 6, on poursuit l'injection jusqu'à ce que l'enceinte 20 présente une largeur suivant la direction de l'axe 10 égale à celle de la bande de roulement ou proche de cette largeur et que l'enceinte s'étende jusqu'aux bord latéraux de celle-ci. En outre, on poursuit l'injection jusqu'à donner à l'enceinte 20 une forme circonférentielle s'étendant sur un tour complet de l'enveloppe autour de l'axe 10.

Cette variante est ici appliquée à une enveloppe présentant une gomme de bordure 21. Il s'agit d'une couche de gomme externe qui relie continûment chaque flanc 6 à la bande de roulement 8 de chaque côté en recouvrant la couche 14, cette dernière n'apparaissant donc pas à la surface de l'enveloppe.

De plus, l'enveloppe a été fabriquée de sorte que la gomme de bordure présente au droit de la couche 14 une zone d'épaisseur amincie par rapport au reste de la gomme de bordure.

On peut prévoir que cette zone est apte à se rompre lorsque la pression dans la poche atteint une valeur prédéterminée. Par conséquent, on peut poursuivre l'injection d'air comprimé dans la poche jusqu'à atteindre une pression suffisant à rompre cette zone amincie au moins d'un côté de l'enveloppe. Il est alors facile de terminer la séparation complète de la bande de roulement par rapport à la carcasse et ce sans l'abîmer et en maîtrisant ses contours.

On peut encore prévoir que cette zone puisse être facilement incisée au moyen d'un outil pour séparer la bande de roulement et la carcasse.

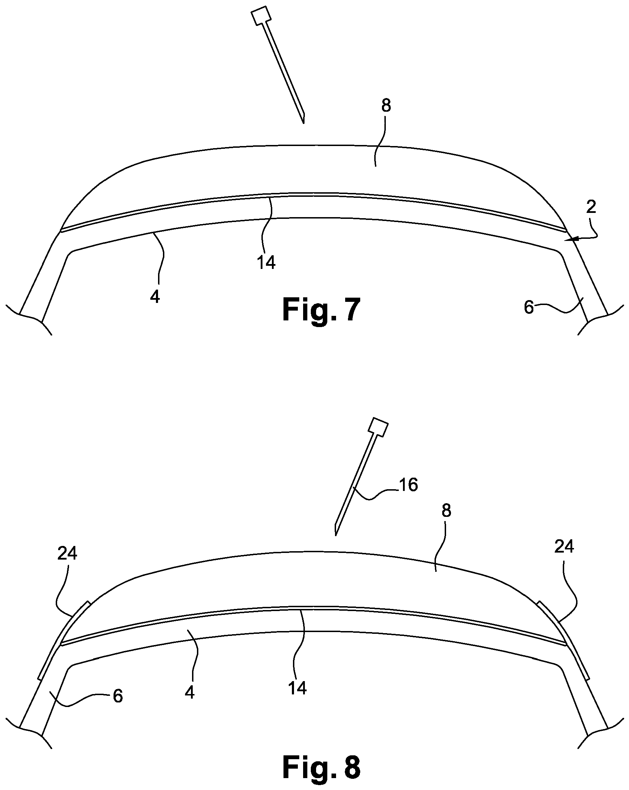

Le même type de procédé peut être mis en oeuvre si l'enveloppe ne comprend pas de gomme de bordure comme c'est le cas dans la variante qui va être décrite. Dans une telle enveloppe illustrée à la figure 7, les bords de la couche 14 sont visibles à la surface de l'enveloppe. Pour éviter la rupture de cette couche lors de l'injection de l'air comprimé conformément à la variante des figures 5 et 6, on recouvre d'une couche 24 étanche à l'air une zone assurant la jonction de la bande de roulement avec des flancs de l'enveloppe comme illustré à la figure 8. La couche 24 est par exemple formée par du ruban adhésif constitué dans un matériau adapté. On peut aussi utiliser un outil apte à plaquer les bords de la bande de roulement sur les flancs du pneumatique. On peut alors, comme précédemment, injecter de l'air comprimé de façon à créer une enceinte 20 s'étendant jusqu'aux bords latéraux de la couche 14 sans craindre sa rupture prématurée. Une fois que l'enceinte a atteint le volume souhaité, il suffit d'ôter les couches 24 pour séparer la bande de roulement et la carcasse. Une fois de plus, la bande de roulement n'est pas abîmée.

Le procédé selon l'invention peut être mis en oeuvre pour remplacer une bande de roulement usagée d'une enveloppe par une bande de roulement neuve ou à tout le moins susceptible d'être encore utilisée en tant que telle pour le roulage dans des conditions prédéterminées.

Mais, si la bande de roulement qui vient d'être ôtée est encore susceptible d'être utilisée en tant que telle pour le roulage dans des conditions prédéterminées, on peut l'employer pour rechaper une carcasse d'une autre enveloppe de pneumatique, ou même encore, ultérieurement, pour rechaper la même carcasse lorsque la nouvelle bande de roulement installée entre-temps devra être remplacée.

Le procédé de l'invention peut ainsi être mis en oeuvre pour remplacer une bande de roulement d'une enveloppe avec une bande de roulement d'un autre type alors que la première est encore utilisable. On peut ainsi remplacer une bande de roulement propice à la conduite en hiver par une bande de roulement propice à la conduite en été et inversement. De même, on peut remplacer une bande de roulement convenant à une conduite sportive par une bande de roulement convenant à une conduite de tourisme.

Le procédé peut donc être appliqué à une enveloppe dont la bande de roulement présente un niveau d'usure incompatible avec une nouvelle utilisation de cette bande en tant que telle pour le roulage dans des conditions prédéterminées, ou encore à une enveloppe dont la bande de roulement présente un niveau d'usure compatible avec une nouvelle utilisation en tant que telle pour le roulage dans des conditions prédéterminées.

Les conditions prédéterminées sont les conditions normales d'utilisation du véhicule conforme à la réglementation et de sorte que la conduite du véhicule ne fasse pas courir de risque inconsidéré à ses occupants.

Dans le premier cas, cela signifie que la bande de roulement est suffisamment usée pour ne pas justifier qu'elle soit à nouveau installée sur une carcasse pour être utilisée pendant une certaine durée. C'est la raison pour laquelle, après séparation de la bande de roulement par rapport à la carcasse, on détruit la bande de roulement.

Dans le deuxième cas, au contraire, l'usure est minime ou nulle et justifie que la bande soit installée sur une carcasse pour être réutilisée sur une longue durée.

Bien entendu, on pourra apporter à l'invention de nombreuses modifications sans sortir du cadre de celle-ci.

Le fluide injecté pourrait être un gaz autre que de l'air. Il pourrait également s'agir d'un liquide comme de l'eau.

On peut prévoir que l'injection du fluide a lieu non dans une couche apte à se gonfler mais au niveau d'une interface mécanique de l'enveloppe qui lui permet de recevoir le fluide sous pression. Il peut s'agir par exemple une couche d'une rugosité particulière, d'un obstacle mécanique, ou encore de deux couches assemblées de façon amovible notamment par des fixations de type velour-crochet.

Il n'est pas nécessaire que la couche 14 qui reçoit le fluide sous pression s'étende sur toute la largeur de la bande de roulement et sur toute la circonférence de l'enveloppe. Il suffit qu'elle s'étende localement à l'endroit de l'injection pour permettre d'amorcer la séparation de la bande et de la carcasse.

## Revendications

1. Procédé de rechapage d'une enveloppe (2) de pneumatique de véhicule, **caractérisé en ce qu'**on injecte un fluide dans une enveloppe entre une bande de roulement (8) et un support (4) de la bande de roulement pour les éloigner l'un de l'autre, puis qu'on sépare la bande de roulement (8) et le support (4).

2. Procédé selon la revendication précédente dans lequel, préalablement à l'injection, on ramollit une couche (14) de l'enveloppe.

3. Procédé selon au moins l'une quelconque des revendications précédentes, appliqué à une enveloppe comprenant une couche (14) située entre la bande de roulement et le support et apte à se gonfler pour former une enceinte (20) dans une paroi de l'enveloppe.

4. Procédé selon au moins l'une quelconque des revendications précédentes, dans lequel le fluide est un gaz, notamment de l'air.

5. Procédé selon au moins l'une quelconque des revendications précédentes, dans lequel on effectue l'injection à travers la bande de roulement (8).

6. Procédé selon au moins l'une quelconque des revendications précédentes, dans lequel on fait progresser une aiguille d'injection (16) dans l'épaisseur d'une paroi de l'enveloppe, l'aiguille présentant du fluide sous pression à son orifice d'extrémité libre durant la progression.

7. Procédé selon au moins l'une quelconque des revendications précédentes, dans lequel on effectue l'injection de façon à former une enceinte (20) de fluide présentant une largeur supérieure à la moitié de la largeur de la bande de roulement mesurée suivant la direction d'un axe principal (10) de l'enveloppe.

8. Procédé selon au moins l'une quelconque des revendications précédentes, dans lequel on effectue l'injection de façon à former une enceinte (20) de fluide s'étendant jusqu'à des bords latéraux de la bande de roulement.

9. Procédé selon au moins l'une quelconque des revendications précédentes, dans lequel on effectue l'injection de façon à former une enceinte (20) de fluide s'étendant sur un tour complet autour d'un axe principal de l'enveloppe.

10. Procédé selon au moins l'une quelconque des revendications précédentes, appliqué à une enveloppe comprenant une gomme de bordure (21) présentant une zone (22) d'épaisseur amincie par rapport au reste de la gomme de bordure, cette zone étant située au droit d'une couche (14) située entre la bande de roulement et le support et apte à se gonfler pour former une enceinte (20) dans une paroi de l'enveloppe.

11. Procédé selon au moins l'une quelconque des revendications 1 à 9, dans lequel, préalablement à l'injection, on recouvre d'une couche (24) étanche au fluide
une jonction de la bande de roulement avec au moins un flanc de l'enveloppe.

12. Procédé selon au moins l'une quelconque des revendications précédentes, dans lequel la bande de roulement présente un niveau d'usure incompatible avec une nouvelle utilisation de cette bande de roulement en tant que telle pour le roulage dans des conditions prédéterminées.

13. Procédé selon au moins l'une quelconque des revendications précédentes, dans lequel on détruit la bande de roulement (8).

14. Procédé selon au moins l'une quelconque des revendications 1 à 11, dans lequel la bande de roulement présente un niveau d'usure compatible avec une nouvelle utilisation de cette bande de roulement en tant que telle pour le roulage dans des conditions prédéterminées.

15. Procédé selon au moins l'une quelconque des revendications 1 à 11 ou 14, dans lequel on monte la bande de roulement (8) sur une carcasse d'une autre enveloppe de pneumatique.

## Patentansprüche

1. Verfahren zur Runderneuerung einer Hülle (2) eines Fahrzeugreifens, **dadurch gekennzeichnet, dass** man ein Fluid in eine Hülle zwischen einen Laufstreifen (8) und einen Träger (4) des Laufstreifens spritzt, um sie voneinander zu beabstanden, und man dann den Laufstreifen (8) und den Träger (4) trennt.

2. Verfahren nach dem vorhergehenden Anspruch, bei dem man vor dem Einspritzen eine Schicht (14) der Hülle erweicht.

3. Verfahren nach mindestens einem der vorhergehenden Ansprüche, das auf eine Hülle angewandt wird, die eine Schicht (14) umfasst, die zwischen dem Laufstreifen und dem Träger gelegen ist und geeignet ist, sich aufzublähen, um eine Kammer (20) in einer Wand der Hülle zu bilden.

4. Verfahren nach mindestens einem der vorhergehenden Ansprüche, wobei das Fluid ein Gas ist, insbesondere Luft.

5. Verfahren nach mindestens einem der vorhergehenden Ansprüche, wobei man das Einspritzen durch den Laufstreifen (8) hindurch ausführt.

6. Verfahren nach mindestens einem der vorhergehenden Ansprüche, wobei man eine Einspritznadel (16) in die Dicke einer Wand der Hülle vordringen lässt, wobei die Nadel während des Vordringens Fluid unter Druck an ihrer Öffnung am freien Ende aufweist.

7. Verfahren nach mindestens einem der vorhergehenden Ansprüche, wobei man das Einspritzen so durchführt, dass eine Fluidkammer (20) gebildet wird, die eine Breite von mehr als der Hälfte der Breite des Laufstreifens, gemessen entlang der Richtung einer Hauptachse (10) der Hülle, aufweist.

8. Verfahren nach mindestens einem der vorhergehenden Ansprüche, wobei man das Einspritzen so durchführt, dass eine Fluidkammer (20) gebildet wird, die sich bis zu seitlichen Rändern des Laufstreifens erstreckt.

9. Verfahren nach mindestens einem der vorhergehenden Ansprüche, wobei man das Einspritzen so durchführt, dass eine Fluidkammer (20) gebildet wird, die sich über einen vollständigen Umfang um eine Hauptachse der Hülle erstreckt.

10. Verfahren nach mindestens einem der vorhergehenden Ansprüche, das auf eine Hülle angewandt wird, die ein Randgummi (21) umfasst, das einen Bereich (22) mit verminderter Dicke in Bezug auf den Rest des Randgummis aufweist, wobei dieser Bereich direkt an einer Schicht (14) gelegen ist, die zwischen dem Laufstreifen und dem Träger gelegen ist und geeignet ist, sich aufzublähen, um eine Kammer (20) in einer Wand der Hülle zu bilden.

11. Verfahren nach mindestens einem der Ansprüche 1 bis 9, wobei man vor dem Einspritzen eine Verbindungsstelle zwischen dem Laufstreifen und mindestens einer Flanke der Hülle mit einer gegenüber dem Fluid dichten Schicht (24) abdeckt.

12. Verfahren nach mindestens einem der vorhergehenden Ansprüche, wobei der Laufstreifen einen Verschleißgrad aufweist, der mit einer erneuten Verwendung dieses Laufstreifens als solchen zum Fahren unter vorbestimmten Bedingungen unvereinbar ist.

13. Verfahren nach mindestens einem der vorhergehenden Ansprüche, wobei man den Laufstreifen (8) zerstört.

14. Verfahren nach mindestens einem der Ansprüche 1 bis 11, wobei der Laufstreifen einen Verschleißgrad aufweist, der mit einer erneuten Verwendung dieses Laufstreifens als solchen zum Fahren unter vorbestimmten Bedingungen vereinbar ist.

15. Verfahren nach mindestens einem der Ansprüche 1 bis 11 oder 14, wobei man den Laufstreifen (8) auf eine Karkasse einer anderen Reifenhülle montiert.

## Claims

1. Method for retreading a vehicle tyre casing (2), **characterized in that** a fluid is injected into a casing between a tread (8) and a tread backing (4) in order to space them apart, and then the tread (8) and the backing (4) are separated.

2. Method according to the preceding claim, wherein, prior to the injection, a layer (14) of the casing is softened.

3. Method according to at least either one of the preceding claims, which is applied to a casing comprising a layer (14) that is located between the tread and the backing and is able to inflate in order to form an enclosure (20) in a wall of the casing.

4. Method according to at least any one of the preceding claims, wherein the fluid is a gas, in particular air.

5. Method according to at least any one of the preceding claims, wherein the injection is carried out through the tread (8).

6. Method according to at least any one of the preceding claims, wherein an injection needle (16) is passed into the thickness of a wall of the casing, the needle having pressurized fluid at its free end orifice as it is passed in.

7. Method according to at least any one of the preceding claims, wherein the injection is carried out so as to form a fluid enclosure (20) having a width greater than half the width of the tread measured in the direction of a main axis (10) of the casing.

8. Method according to at least any one of the preceding claims, wherein the injection is carried out so as to form a fluid enclosure (20) extending as far as lateral edges of the tread.

9. Method according to at least any one of the preceding claims, wherein the injection is carried out so as to form a fluid enclosure (20) extending through one complete turn about a main axis of the casing.

10. Method according to at least any one of the preceding claims, which is applied to a casing comprising an edge gum (21) having a region (22) of reduced thickness compared with the rest of the edge gum, this region being located in line with a layer (14) that is located between the tread and the backing and is able to inflate in order to form an enclosure (20) in a wall of the casing.

11. Method according to at least any one of Claims 1 to 9, wherein, prior to the injection, a joint of the tread to at least one sidewall of the casing is covered with a fluid-tight layer (24).

12. Method according to at least any one of the preceding claims, wherein the tread has a level of wear that is incompatible with this tread being used again as such for rolling under predetermined conditions.

13. Method according to at least any one of the preceding claims, wherein the tread (8) is destroyed.

14. Method according to at least any one of Claims 1 to 11, wherein the tread has a level of wear that is compatible with this tread being used again as such for rolling under predetermined conditions.

15. Method according to at least any one of Claims 1 to 11 or 14, wherein the tread (8) is mounted on a carcass of another tyre casing.
